# FASCICULE DE BREVET EUROPEEN

(11) **EP 0 701 689 B1**
(45) Date de publication et mention de la délivrance du brevet: **19.03.1997**
(21) Numéro de dépôt: 94917709.1
(22) Date de dépôt: 02.06.1994
(51) Int. Cl.: G01N 1/06

(54) **MICROTOME A ASPIRATION, NOTAMMENT POUR TRAVAUX HISTOLOGIQUES ET SIMILAIRES**
MIKROTON MIT ABSAUGVORRICHTUNG, INSBESONDERE FUER HISTOLOGISCHE ARBEITEN ODER DERGLEICHEN
SUCTION MICROTOME, ESPECIALLY FOR HISTOLOGICAL RESEARCH AND THE LIKE

(30) Priorité: 02.06.1993 FR 9306801
(43) Date de publication de la demande: 20.03.1996
(73) Titulaire: MICROM LABORGERÄTE GmbH, D-69184 Walldorf (DE)
(72) Inventeur: Tabone, Hervé, 69760 Limonest (FR)
(74) Mandataire: Gnatzig, Klaus
(86) Numéro de dépôt international: FR9400648
(87) Numéro de publication internationale: WO9428390

(56) Documents cités:
- WO-A-93/05936
- DE-A- 1 963 050
- DE-C- 402 888
- US-A- 3 191 476
- US-A- 3 227 020

## Description

On sait que pour certains travaux histologiques, on a recours à des appareils dits "microtomes" qui, en travaillant soit à la température ambiante, soit dans des chambres cryostatiques, assurent le découpage de tissus en de très fines tranches, l'épaisseur de coupe pouvant en pratique varier de 0,5 à 60 microns.

Le document **WO-A-9 305 936** décrit un microtome pour travaux histologiques dans lequel les déchets sont aspirés à l'aide d'un conduit menant à la source de vide, ce conduit étant maintenu contre la lame de découpage à l'aide d'un aimant ou d'une bande de papier adhésif. Ce conduit est disposé adjacent à la lame de découpage, à environ 1 cm de celle-ci.

Le document **DE-A-1 963 050** décrit un microtome dans lequel les déchets sont aussi aspirés à l'aide d'un conduit placé à proximité de la lame de découpage.

Dans le document **DE-C-402 888**, la lame de découpage est placée au-dessus d'une plaque munie de trous connectés à une pompe, pour l'évacuation des déchets.

Les microtomes classiques comprennent généralement un support qui est destiné à recevoir le morceau de tissu à découper et qui est animé d'un mouvement alternatif combiné à un déplacement micrométrique d'avance orienté perpendiculairement au plan du mouvement alternatif. A ce dispositif porte-pièce est associé un porte-couteau réglable en orientation par rapport au support et agencé pour permettre le montage d'une lame propre à découper le morceau de tissu solidaire du support alternatif.

Les opérations de découpage sont très délicates et il peut arriver que les coupes obtenues s'enroulent sur elles-mêmes en compliquant leur préhension. Par ailleurs et surtout les déchets, c'est-à-dire les coupes imparfaites, sont très fréquents et polluent la chambre de travail.

C'est à ces inconvénients qu'entend plus particulièrement remédier la présente invention, laquelle consiste en fait à doter le microtome d'un système d'aspiration qui est intégré au porte-couteau et qui est propre à être sélectivement commandé pour favoriser la planéité des coupes en s'opposant à leur enroulement sur elles-mêmes, ou pour assurer l'évacuation des déchets immédiatement après leur apparition au niveau de la lame de découpage.

Le microtome décrit dans le préambule de la revendication 1 est connu du document EP-A-0 201 983.

Le microtome suivant l'invention est principalement remarquable en ce que son porte-couteau comprend en combinaison :
- une cavité d'aspiration qui est ménagée immédiatement au droit de la lame de découpage et qui est reliée à une source de vide ou de dépression ;
- et un clapet basculant qui est monté sur le corps du porte-couteau de manière à se trouver dans le prolongement de la lame lorsqu'il a été amené à la position pour laquelle il ferme partiellement la cavité d'aspiration.

Afin d'améliorer encore la planéité des coupes en s'opposant radialement leur enroulement sur elles-mêmes, on associe avantageusement au clapet un couvercle qui est profilé pour le recouvrir et définir, lorsque Ledit clapet est fermé, au-dessus de celui-ci un mince espace libre apte à guider le flux d'air aspiré et à recueillir ainsi à plat la coupe obtenue.

Le dessin annexé, donné à titre d'exemple, permettra de mieux comprendre l'invention, les caractéristiques qu'elle présente et les avantages qu'elle est susceptible de procurer :

Fig. 1 est une vue en perspective montrant un microtome établi conformément à l'invention.

Fig. 2 est une coupe transversale du porte-couteau du microtome suivant fig. 1.

Fig. 3 est une coupe à plus grande échelle suivant le plan indiqué en III-III en fig. 2.

Fig. 4 reproduit fig. 2 à la position ouverte du clapet.

Fig. 5 montre en perspective, à l'état séparé, les trois éléments qui constituent le système d'aspiration du microtome suivant fig. 1 à 4.

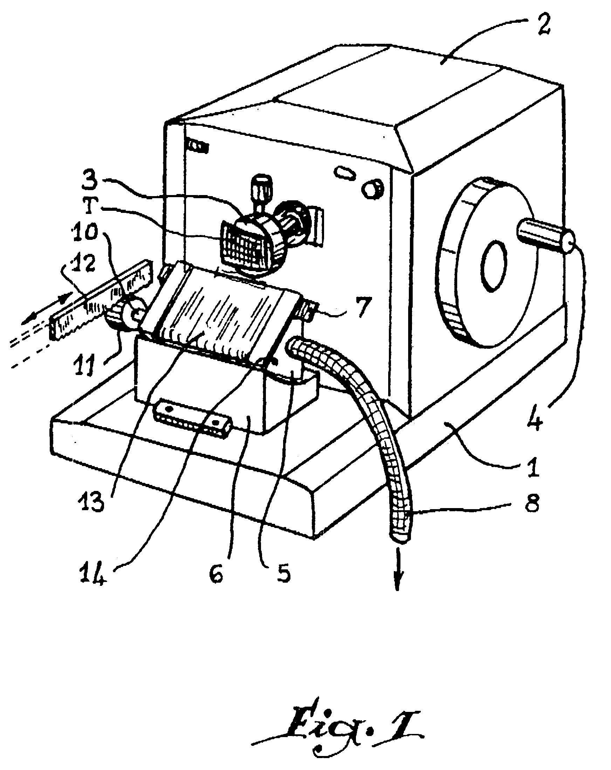

A la façon en soi connue, le microtome représenté en fig. 1 comprend un socle 1 sur lequel est fixé un carter 2 renfermant le mécanisme usuel agencé pour impartir un support antérieur 3 un déplacement vertical alternatif combiné à une avance horizontale micrométrique, lequel mécanisme est manoeuvré par une manivelle latérale 4 dans le cas considéré. La partie du socle 1 qui est disposée en avant du carter 2 reçoit le corps 5 d'un porte-couteau qui est fixé sur une embase 6 de façon réglable en inclinaison.

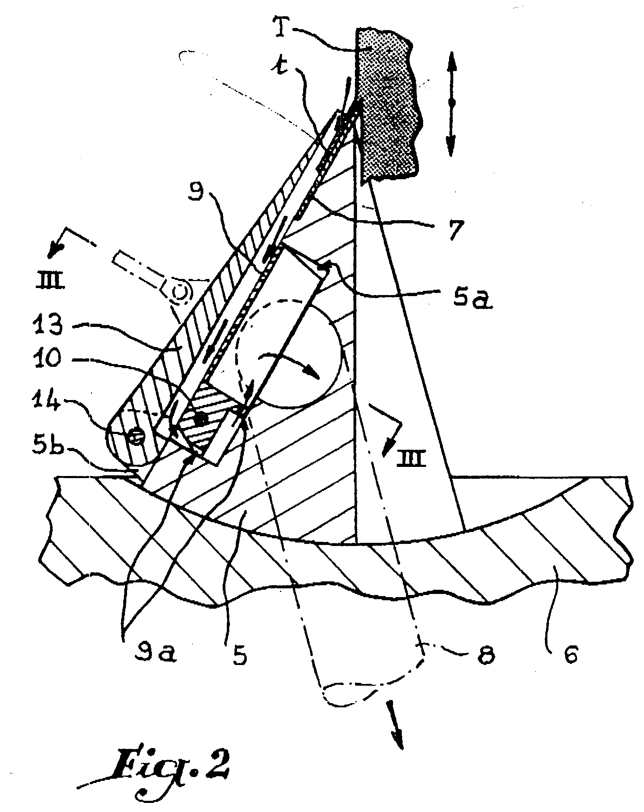

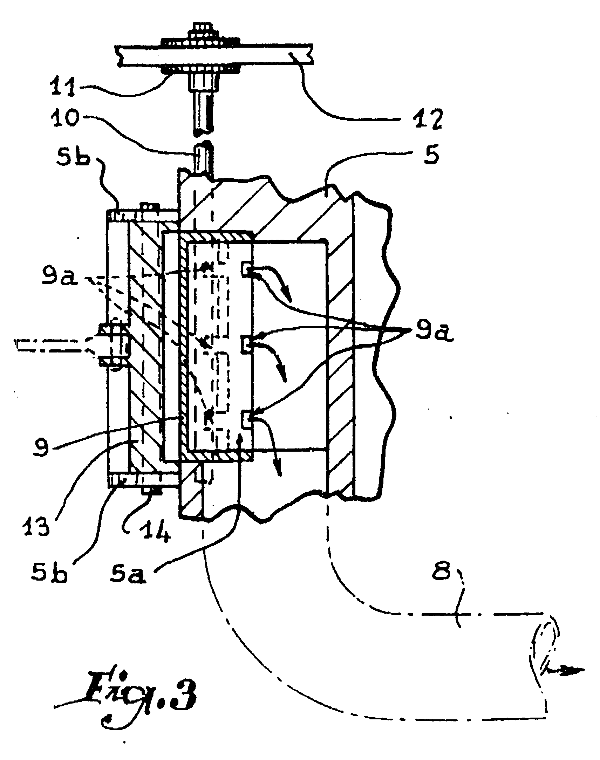

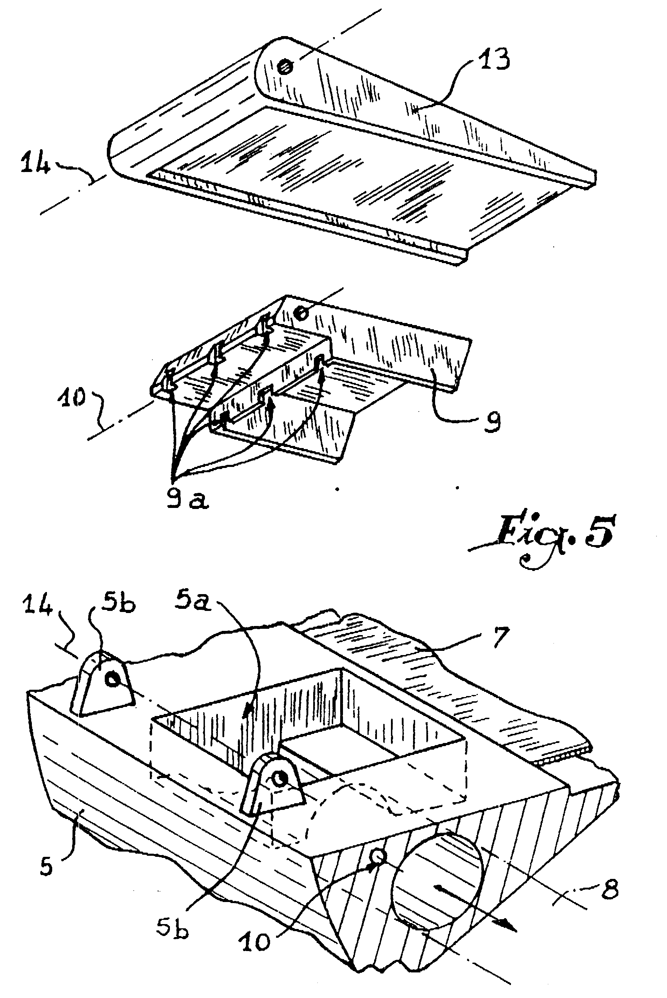

Comme illustré en fig. 2 à 5, la face du corps 5 est tournée obliquement vers le haut pour assurer la fixation amovible d'une lame 7 dont le tranchant dépasse légèrement la face précitée pour être en mesure de venir au contact du morceau de tissu T qui est fixé sur le support 3 en vue de l'opération de découpage.

Conformément à l'invention, cette face supérieure est creusée d'une cavité 5a qui se prolonge latéralement pour permettre le raccordement d'une canalisation flexible 8, laquelle aboutit à une source de vide ou de dépression dont le débit est avantageusement susceptible d'être réglé par l'utilisateur, par exemple à l'aide d'une vanne de contrôle (non représentée). Le débouché supérieur de la cavité 5a est disposé immédiatement au-dessous du bord inférieur de la lame 7 et dans ce débouché sont engagées les ailes latérales de la section en U d'un clapet basculant 9, disposé dans le prolongement de la lame 7.

La manoeuvre angulaire du clapet 9 peut être réalisée de toute manière appropriée. On peut avoir recours à un système d'excentrique, mais dans l'exemple de réalisation considéré, on a supposé que ce clapet 9 était solidaire d'un arbre 10 sur l'une des extrémités dépassantes duquel était calé un pignon 11 commandé par une crémaillère 12.

Il convient ici d'observer qu'à sa position de fermeture illustrée en fig. 2, le clapet 9 n'assure pas une obturation parfaite du débouché de la cavité 5a. Effectivement, le talon de ce clapet qui est disposé en arrière de l'arbre 10, ainsi que le bord inférieur d'une cloison prévue en avant dudit arbre, sont l'un et l'autre découpés d'échancrures 9a qui permettent le passage d'un faible flux d'air. L'effet d'aspiration ainsi engendré s'exerce sur les coupes réalisées par la lame 7 en évitant l'auto-enroulement des tranches sur elles-mêmes.

Ce résultat avantageux peut être encore amélioré à l'aide d'un couvercle escamotable 13 à section en U ouverte vers le bas de manière à recouvrir le clapet 9. Ce couvercle 13 est monté de façon à pouvoir être éclipsé au moment opportun, par exemple en étant monté sur un pivot 14 supporté par des oreilles 5b du corps 5. On observera que le bord libre de ce couvercle 13 se trouve disposé au-delà du bord libre du clapet 9 de façon à recouvrir partiellement la lame 7.

Lors de l'utilisation de microtome, le clapet 9 est normalement maintenu à la position fermée suivant fig. 2. La tranche ou coupe t détachée par la lame 7 à partir de la pièce T à découper glisse le long de cette lame, ce déplacement étant favorisé par le flux d'aspiration qui est autorisé par les échancrures 10a et qui s'écoule dans le mince espace libre ménagé entre le clapet 9 et le couvercle 13. Cette aspiration évite radicalement l'auto-enroulement de la coupe t qui peut être finalement recueillie à plat moyennant escamotage momentané du couvercle 13 par basculement autour de son pivot 10.

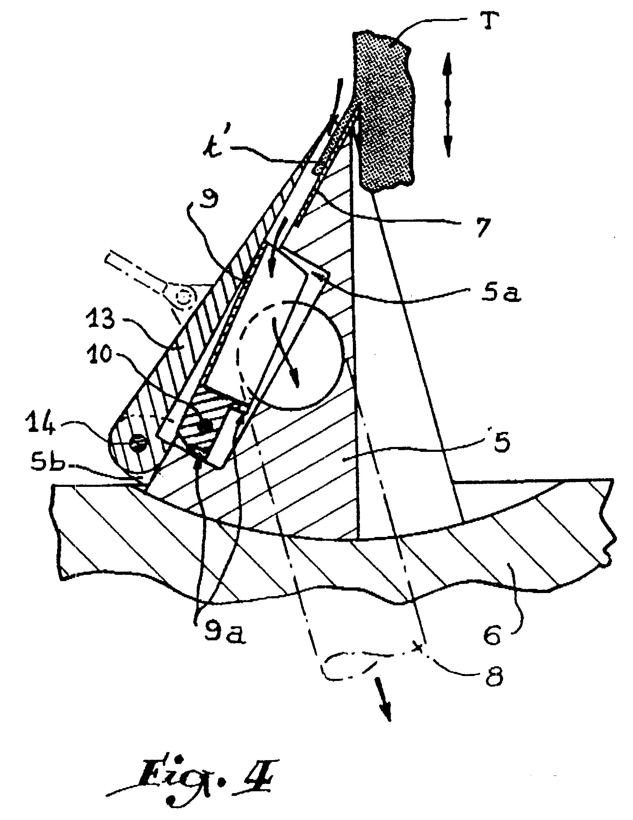

Si par contre la coupe t' (fig. 4) détachée par la lame 7 dans la pièce T ne convient pas et doit, de l'avis de l'opérateur, être considérée comme un déchet inutilisable, ledit opérateur manoeuvre le clapet 9 à l'ouverture, de sorte que la forte dépression qui règne dans la cavité 5a assure l'aspiration de cette coupe t' qui est immédiatement éliminée à travers La canalisation 8, laquelle est éventuellement équipée d'un filtre propre à faciliter la collecte des déchets ainsi retirés de la chambre de travail du cryostat renfermant le microtome.

On évite de la sorte l'accumulation des déchets dans la chambre de travail, ce qui facilite évidemment le processus de nettoyage et de décontamination de ladite chambre.

Il doit d'ailleurs être entendu que la description qui précède n'a été donnée qu'à titre d'exemple et qu'elle ne limite nullement le domaine de l'invention dont on ne sortirait cas en remplaçant les détails d'exécution décrits par tous autres équivalents. On conçoit notamment que l'invention est applicable dans le cas où le mécanisme moteur est associé au porte-couteau pour animer celui-ci d'un mouvement alternatif et d'une avance micrométrique par rapport à un porte-tissu fixe.

## Revendications

1. Microtome pour travaux histologiques et similaires, du genre comprenant un support porte-tissu (3), un porte-couteau (5) pour la fixation amovible d'une lame de découpage (7) et un mécanisme (2) propre à animer l'un de ces deux éléments d'un déplacement alternatif combiné à un mouvement d'avance micrométrique, caractérisé en ce qu'il comprend en outre :
- une cavité d'aspiration (5a) qui est ménagée dans le corps du porte-couteau (5) immédiatement au droit de la lame (7) et qui est reliée à une source de vide ou de dépression ;
- et un clapet (9) qui est monté sur le corps du porte-couteau (5) de manière à se trouver dans le prolongement de la lame (7) lorsqu'il a été amené à la position pour laquelle il ferme la cavité (5a).

2. Microtome suivant la revendication 1, caractérisé en ce qu'au clapet (9) est associé un couvercle escamotable (13) qui est profilé pour recouvrir ledit clapet (9) et pour définir, à la position fermée de celui-ci, un mince espace libre apte à guider le flux d'air aspiré et à recueillir ainsi à plat la coupe (t) obtenue.

3. Microtome suivant la revendication 2, caractérisé en ce qu'à la posiiton fermée du clapet (9), le débit d'air qui est aspiré entre ledit clapet et le couvercle (13) est réduit.

4. Microtome suivant la revendication 3, caractérisé en ce que l'espace libre ménagé entre le couvercle (13) et le clapet (9) communique avec la cavité d'aspiration (5a) à travers des échancrures (9a) qui réduisent le débit.

## Patentansprüche

1. Mikrotom für histologische und ähnliche Arbeiten mit einem Probenhalter (3) und einem Messerträger (5) zur abnehmbaren Anbringung einer Schneideklinge (7), sowie eines Mechanismus' (2), über den eines dieser Teile in Kombination mit einem mikrometrischen Vorschub hin- und herbewegt wird, dadurch gekennzeichnet, daß es desweiteren umfaßt:
- eine Ansaugvertiefung (5a), die unmittelbar in der Nähe der Schneideklinge (7) in den Körper des Messerträgers (5) eingearbeitet ist und mit einer Vakuum- oder Unterdruckquelle verbunden ist;
- ein Klappenventil (9), das so auf den Messerträger (5) montiert ist, daß es sich in der Verlängerung der Klinge (7) befindet, wenn es in die Position gebracht wird, in der es die Ansaugvertiefung (5a) verschließt.

2. Mikrotom gemäß Anspruch 1, dadurch gekennzeichnet, daß dem Klappenventil (9) ein abklappbarer Deckel (13) zugeordnet ist, dessen Profil so ausgelegt ist, das er das genannte Klappenventil (9) abdeckt und, wenn dieses geschlossen ist, einen kleinen Freiraum bildet, über den der angesaugte Luftstrom geführt und somit der Schnitt t flach entnommen werden kann.

3. Mikrotom gemäß Anspruch 2, dadurch gekennzeichnet, daß bei geschlossenem Klappenventil (9) der zwischen diesem Klappenventil und dem Deckel (13) angesaugte Luftstrom reduziert ist.

4. Mikrotom gemäß Anspruch 3, dadurch gekennzeichnet, daß der Freiraum zwischen dem Deckel (13) und dem Klappenventil (9) mit der Ansaugvertiefung (5a) verbunden ist über Ausschnitte (9a), die den Luftstrom vermindern.

## Claims

1. Microtome for histological work and the like, of the kind comprising a tissue-carrier support (3), a knife carrier (5) for the interchangeable mounting of a sectioning blade (7), and a mechanism (2) suitable for actuating one of these two elements by an alternating displacement combined with a micrometric advancing movement, characterized in that it furthermore comprises:
- a suction cavity (5a) which is formed in the body of the knife carrier (5) in the vicinity of the blade (7) and which is connected to a source of vacuum or of reduced pressure;
- and a flap valve (9) which is mounted on the body of the knife carrier (5) so as to be located in the extension of the blade (7) when it has been brought into the position in which it closes the cavity (5a).

2. Microtome according to claim 1, characterized in that there is associated with the flap valve (9) a retractable cover (13) which is profiled to cover the said flap valve (9) and to define, in the closed position of the latter, a narrow free space capable of guiding the flow of suction air and thus to collect, in a flat state, the section (t) obtained.

3. Microtome according to claim 2, characterized in that in the closed position of the flap valve (9), the flow rate of air which is aspirated between the said flap valve and the cover (13) is reduced.

4. Microtome according to claim 3, characterized in that the free space formed between the cover (13) and the flap valve (9) communicates with the suction cavity (5a) through notches (9a) which reduce the flow rate.
